# EUROPEAN PATENT SPECIFICATION

(11) **EP 4 118 328 B1**
(45) Date of publication and mention of the grant of the patent: **06.05.2026**
(21) Application number: 21711782.9
(22) Date of filing: 03.03.2021
(51) Int. Cl.: F03D 13/25, F03D 17/00

(54) **METHOD FOR DETERMINING A SPATIAL ARRANGEMENT OF A FLOATING WIND TURBINE RELATIVE TO ITS ENVIRONMENT**
VERFAHREN ZUR BESTIMMUNG EINER RÄUMLICHEN ANORDNUNG EINER SCHWIMMENDEN WINDTURBINE IN BEZUG AUF IHRE UMGEBUNG
PROCÉDÉ POUR DÉTERMINER UN AGENCEMENT SPATIAL D'UNE ÉOLIENNE FLOTTANTE PAR RAPPORT À SON ENVIRONNEMENT

(30) Priority: 25.03.2020 EP 20165452
(43) Date of publication of application: 18.01.2023
(73) Proprietor: Siemens Gamesa Renewable Energy A/S, 7330 Brande (DK)
(72) Inventor: ESBENSEN, Thomas, 7400 Herning (DK); LAUGESEN, Kasper, 6700 Esbjerg (DK)
(74) Representative: SGRE-Association
(86) International application number: PCT/EP2021/055295
(87) International publication number: WO 2021/190888

(56) References cited:
- EP-A1- 2 807 373
- EP-A1- 3 782 897
- EP-A2- 2 472 105
- EP-B1- 2 472 105
- EP-B1- 2 807 373
- JP-A- 2005 264 865
- US-A1- 2011 074 155

## Description

### Field of invention

The present invention relates to the technical field of floating wind turbines as well as to methods of operating such wind turbines.

### Art Background

Standard onshore or offshore non-floating wind turbines do not have dedicated sensors installed to measure the additional degrees of freedom that a floating wind turbine has. Measuring rigid body rotations is relevant in order to control or monitor the stability of the wind turbine system. For example, the floater pitch angle information is relevant, since a floating wind turbine may have to be stabilized by control of floater pitch. However, this information is in general not available.

Conventionally, two approaches are known. According to a first approach, information is determined indicating change in floater pitch or floater pitch movement from nacelle accelerometers or tower accelerometers that are typically present as standard sensors in most wind turbines. However, the absolute floater pitch angle can hardly be known from this approach.

JP 2005 264865 A provides a windmill device having improved durability by reducing loads of a supporting column and a connection portion between the supporting column and a nacelle by the vibration of a float. It comprises a propeller mounted on the bottom of the float for propelling the float, a steering device for steering the propeller to change the direction of the float, and a control device for controlling the steering device according to the direction of wind of an air flow. The control device controls the steering device according to the direction of the wind to change the direction of the float following the direction of the wind.

US 2011074155 A1 discloses a floating offshore wind turbine and a floating offshore wind farm with at least one floating offshore wind turbine. The floating offshore wind turbine includes a floating platform anchored to an underwater ground, a wind turbine mounted on the floating platform, and a drive. The drive is adapted to horizontally move the floating platform. Further a method for positioning a floating offshore wind turbine is provided.

EP 2 807 373 A1 shows an assembly formed by a wind turbine and a floating platform. The assembly is allowing an orientation of the platform in order to obtain conditions of maximum efficiency in the wind turbine. It comprises first sensors for detecting an effective rotation axis angle formed between the rotation axis and a horizontal plane, second sensors for detecting wind direction, platform orientation means for modifying the effective rotation axis angle, and a control unit adapted for receiving a first input from the first sensors and a second input from the second sensors.

According to a second approach, information about the floater pitch angle is determined by adding further sensors to the system, such as a sensor determining the inclination angle of the turbine, the tower, or the support structure of the floating wind turbine.

Accordingly, there may be a need for a reliable and efficient method to determine spatial degrees of freedom of the floating wind turbine such as floater pitch.

### Summary of the Invention

This need may be met by the subject matters according to the independent claims. Advantageous embodiments of the present invention are described by the dependent claims.

According to an aspect of the invention, a sensor system for a floating wind turbine comprises a wind sensor configured to provide a wind sensor signal indicative of a wind flow. The sensor system further comprises a processing unit configured to receive the wind sensor signal and to determine, based on the wind sensor signal, information indicative of a spatial arrangement of a floating base of the floating wind turbine relative to an environment of the floating wind turbine.

According to a further aspect of the invention, a method of operating a floating wind turbine comprises (i) providing, by means of a wind sensor, a wind sensor signal indicative of a wind flow; (ii) receiving, by means of a processing unit, the wind sensor signal; and (iii) determining, by means of the processing unit and based on the wind sensor signal, information indicative of a spatial arrangement of a floating base of the floating wind turbine relative to an environment of the floating wind turbine.

In the context of the present application, a "wind turbine" is any device that is configured to convert wind energy into electrical energy, in particular for distribution to a grid and/or for local energy supply. A wind turbine may comprise a tower, a wind rotor, a nacelle, a shaft, in particular a low-speed shaft and/or a high-speed shaft, a gearbox, a generator, a brake assembly, a pitch drive, and/or a yaw drive. The wind rotor may be a rotor assembly and may comprise one or more blades and a central hub, to which the blades are attached. The wind rotor may further comprise pitch bearings connecting the rotor hub with the blades. With the pitch bearings, an orientation of the blades may be adjustable, the so-called blade pitch. The wind rotor may be, but need not be, tilted upwards or downwards at a tilt angle. The tilt angle may be zero if the tower of the wind turbine is parallel to the rotor plane and/or if a central axis orthogonal to the rotor plane extends horizontally.

A "floating" wind turbine may be defined as any wind turbine having spatial degrees of freedom with respect to a geographic coordinate system and/or with respect to a part of the earth's surface, on or above which the floating wind turbine is arranged. The earth's surface may be a sea floor above which the floating wind turbine is arranged. The spatial degrees of freedom may be additional spatial degrees of freedom of a floating wind turbine compared with a non-floating or fixed-foundations wind turbine. A floating wind turbine may be installed for example in the sea, in particular in the ocean, or in a lake. It may be installed at water depths, where fixed-foundation turbines are not feasible. A plurality of floating wind turbines may be installed in an array, e.g. an offshore wind farm.

The floating wind turbine may comprise a "floating base," with respect to which the above-described spatial degrees of freedom may be defined. The floating base may be a floating platform or a floating foundation. On the floating base, the wind turbine, in particular a tower of the floating wind turbine, may be mounted. Each floating wind turbine of a plurality of floating wind turbines may comprise a respective floating base or the floating base may be shared by two or more floating wind turbines. The motion of the floating base, in particular its spatial degrees of freedom, may be restricted by one or more anchoring elements of the floating base. Such anchoring elements may connect the floating base to the sea floor. An anchoring element may for example comprise a mooring line, which may be fixed to the sea floor or fixed to a weight lying on the sea floor.

An actuation system may be configured to adjust the spatial arrangement of the floating base, e.g. in such a way that the spatial arrangement satisfies a given criterion such as a threshold criterion. Adjusting the spatial arrangement may refer to any change in the spatial arrangement of the floating base compared with the spatial arrangement determined solely by the wind loads and the water loads acting on the floating base. Adjusting the spatial arrangement may include holding a parameter of the floating base constant, e.g. one or more degrees of freedom. The processing unit and/or a control system may be configured to control the actuation system. The floating wind turbine may, but need not comprise the actuation system and/or the control system.

The floating wind turbine may comprise the "sensor system." The sensor system may be arranged at least partially, in particular completely, on the floating wind turbine. For example, the wind sensor may be arranged on the wind turbine, while the processing unit may be arranged elsewhere. The sensor system may be configured to provide an output signal to the control system and/or the actuation system, based on which the spatial arrangement of the wind turbine, in particular the floating base, may be adjusted.

The "wind sensor" may be a sensor configured for measuring a wind flow at a predetermined measuring point, in particular at and/or close to the location of the wind sensor. The wind sensor may be mounted on the wind rotor, on the nacelle, on the tower and/or on the floating base. It may be configured to measure at least one of a wind velocity, a wind speed and/or a wind direction, wherein wind velocity is a vector quantity and wind speed is a corresponding scalar quantity denoting the absolute value of the wind velocity. Wind direction may be measured as a horizontal wind direction in a horizontal plane and/or it may be measured as a vertical wind direction in a vertical plane. Horizontal and vertical may be defined conventionally with respect to a geographical coordinate system.

The wind sensor may be a one-dimensional wind sensor capable of measuring wind speed projected from three-dimensional wind velocity onto a given direction. It may be a two-dimensional wind sensor capable of measuring wind direction and wind speed projected onto a two-dimensional plane. Finally, it may be a three-dimensional wind sensor capable of measuring wind velocity, i.e. wind speed and wind direction in three-dimensional space.

The wind sensor may consist of or comprise at least one of an optical wind sensor, in particular a lidar wind sensor, an acoustical wind sensor, in particular an ultrasonic wind sensor, a mechanical wind sensor, in particular a wind vane and/or a cup anemometer, a thermal wind sensor, and a pressure wind sensor.

The optical wind sensor may be configured to measure wind flow by analyzing light, in particular laser light, reflected from air particles and/or particles suspended in the air. The reflected light may have been emitted by the optical wind sensor. The optical wind sensor may be configured to measure wind speed, in particular wind speed in direction to or from the wind sensor. It may be configured to measure wind speed in different directions and/or at different distances from the wind sensor, i.e. at different measurement points. The optical wind sensor may be mounted to a nacelle, a tower, and/or a floating base of the wind turbine.

The acoustical wind sensor may be configured to measure wind flow by analyzing a transmission time of acoustical waves and/or of acoustical pulses on one or more transmission paths defined by the acoustical wind sensor. If the acoustical waves and/or acoustical pulses are ultrasonic acoustical waves and/or ultrasonic acoustical pulses, the acoustical wind sensor is an ultrasonic wind sensor. The acoustical wind sensor may be configured to measure wind speed and/or wind direction at the location of the wind sensor. Depending on the number of transmission paths, it may be a one-dimensional, a two-dimensional, or a three-dimensional wind sensor. Alternatively or additionally, the acoustical wind sensor may be configured to measure wind flow by analyzing resonating acoustic waves in a cavity, in particular if the acoustical wind sensor is an acoustic resonance wind sensor.

The mechanical wind sensor may be configured to measure wind direction and/or wind speed by analyzing a force exerted by the wind flow on a movable part of the mechanical wind sensor, e.g. cups of a cup anemometer. The mechanical wind sensor may comprise or consist of a cup anemometer and/or a wind vane. It may be configured as a two-dimensional wind sensor measuring wind speed projected onto a measurement plane, which may for example be defined by the arrangement of one or more cups of the cup anemometer. It may accurately measure wind speed only if the wind velocity is parallel to the measurement plane.

A "processing unit" of the sensor system may be defined as any device capable of processing an input signal, in particular the sensor signal. The processing unit may consist of or comprise a processor capable of performing logical and/or arithmetic operations. It may comprise an input at which the wind sensor signal may be received and/or an output, at which the information indicative of the spatial arrangement may be provided.

A "spatial arrangement" of the floating base relative to an environment may refer to any translational or rotational degree of freedom of the floating base relative to the environment. For example, there may be three translational degrees of freedom, e.g. floater heave, floater sway and floater surge, and three rotational degrees of freedom, e.g. floater pitch, floater roll and floater yaw. Floater heave, floater sway and floater surge may denote mutually orthogonal directions. Floater roll may be defined as a rotation around the floater surge axis. Floater pitch may be defined as a rotation around the floater sway axis. Finally, floater yaw may be defined as a rotation around the floater heave axis. The spatial arrangement may refer to a single state at a given moment in time or it may refer to changes in state over a given time period, e.g. an oscillation in one or more of the degrees of freedom of the floating base.

The degrees of freedom may be defined based on an orientation of the wind rotor plane of the wind turbine, on a yaw angle of the nacelle of the wind turbine, on an inclination of the tower of the wind turbine, on a wind direction at the floating wind turbine and/or on a wave direction at the floating wind turbine. Alternatively or additionally, they may be defined based on a local geographic coordinate system, e.g. based on a vertical direction and/or on a horizontal plane. Floater heave, floater sway and floater surge may be, but need not be, orthogonal to each other. These directions may depend on an actual spatial arrangement of the wind turbine, e.g. the current arrangement, or they may be universally defined independently of an actual spatial arrangement of the wind turbine.

For example, floater surge may be in direction orthogonal to the rotor plane. Floater sway may be orthogonal to floater surge. In addition, floater sway may be in a horizontal direction and/or orthogonal to a central axis of the tower of the wind turbine.

Alternatively, floater sway may be in direction parallel to the rotor plane. In addition, floater sway may be in a horizontal direction and/or orthogonal to a central axis of the tower of the wind turbine. Floater surge may be orthogonal to floater sway. In addition, floater surge may be in a horizontal direction and/or orthogonal to the central axis of the tower of the wind turbine.

Instead of being defined relative to the rotor plane, floater sway and floater surge may also be defined relative to a wind plane, which is orthogonal to the wind direction of the incoming wind. The rotor plane and the wind plane may but need not coincide.

Floater heave may be in a vertical direction, parallel to a central axis of the tower of the wind turbine and/or orthogonal to both floater sway and floater surge.

An "environment" of the wind turbine may be determined by any object different from the wind turbine, in particular objects in the vicinity of the wind turbine. The environment may be a reference system, in which this object is static. The environment may be the earth's surface, in particular the earth's surface on or above which the wind turbine is arranged, in particular a sea floor. The environment may be determined by the wind flow, e.g. by an average wind flow in the vicinity of the wind turbine and/or by a wind flow undisturbed by the wind turbine. The environment may be determined by the water flow, in particular an average water flow in the vicinity of the wind turbine.

Information "indicative of a spatial arrangement of the floating base relative to the environment" may comprise a value or a range of possible values for at least one of the above-described translational degrees of freedom and/or rotational degrees of freedom. The information may be indicative of a change in value of at least one of the degrees of freedom.

The information may be indicative of an absolute value in particular of at least one rotational degree of freedom. Such an absolute value may be defined with respect to an equilibrium spatial arrangement of the floating wind turbine, e.g. a spatial arrangement without wind loads and/or in completely calm water, i.e. without waves and currents. The absolute value may be defined with respect to an equilibrium spatial arrangement of the floating wind turbine determined only by the structural loads of the wind turbine. It may be but need not be a spatial arrangement, in which the tower of the wind turbine is completely vertical and/or an axis of the rotor plane is completely horizontal.

The information may be indicative of a spatial arrangement of the wind turbine at a given moment in time. Alternatively or additionally, it may be indicative of a change in spatial arrangement over time, in particular a periodic change over time. This periodic change over time may in particular correlate with a wave pattern impacting on the floating base of the wind turbine. It may also depend on the structural characteristics of the wind turbine.

The information may only be implicitly indicative of the spatial arrangement of the floating base relative to the environment. For example, the information may be explicitly indicative of the spatial arrangement relative to the environment of a part of the wind turbine different from the floating base, e.g. of the tower or of the nacelle, while a spatial relationship between this different part and the floating base is known. This spatial relationship may be fix or it may allow for some degree of freedom between the different parts of the wind turbine, e.g. between floating base and tower, between tower and nacelle, and/or between nacelle and wind rotor. Such a degree of freedom may for example take into account a bending of the tower due to wind load and/or structural load, it may take into account a tilt angle of the wind rotor with respect to the tower and/or it may take into account a further tilt angle of the tower with respect to the floating base.

The above sensor system, a floating wind turbine comprising such a sensor system and/or a corresponding method of operating a floating wind turbine may be advantageous, because information about the spatial arrangement of a floating wind turbine relative to an environment may be useful for optimizing the operation of a floating wind turbine. For example, an actuation system and/or a control system could rely on this information to adjust the spatial arrangement of the floating wind turbine such that energy yield is increased and/or such that malfunction and/or damage to the wind turbine is reduced or avoided.

Using a wind sensor for determining the information may be advantageous because wind sensors are typically installed in conventional non-floating wind turbines. Thus, the installation of additional sensors in a floating wind turbine may not be required for determining the information. Identical sensors may be usable for onshore wind turbines, offshore wind turbines with fixed foundation and offshore wind turbines with floating foundation or base. Accordingly, costs for additional sensors can be avoided. Also, design changes with respect to a conventional wind turbine in order to accommodate any additional sensors may not be necessary for a floating wind turbine.

According to the invention, the information is indicative of a rotation of the floating base relative to the environment, namely at least one of a floater pitch, a floater roll, and a floater yaw of the floating base. The determination of rotational degrees of freedom may be especially important because a rotation of the floating base can lead to misalignment of the wind rotor relative to the incoming wind direction, whereas this is typically not the case for translational degrees of freedom. Furthermore, the rotation of the floating base may lead to increased loads on components of the wind turbine.

According to a further embodiment of the invention, the information is indicative of a floater pitch. It may be indicative of an absolute floater pitch angle e.g. with respect to an equilibrium spatial arrangement of the wind turbine or of a relative change in floater pitch angle with respect to a previous spatial arrangement. It may be indicative of a static or equilibrium floater pitch angle that may be determined by the wind turbine itself, in particular the center of gravity of the wind turbine, and/or by the wind load, in particular the wind speed at the wind turbine. It may be indicative of an oscillating floater pitch angle that may depend on the water motion at the floating base.

Determining floater pitch may be advantageous, because floater pitch may correlate with misalignment of the rotor plane relative to the incoming wind direction. Based on the information indicative of the floater pitch, such a misalignment could be reduced or corrected. The information may also be helpful to distinguish between a static or equilibrium angle and an oscillating angle, wherein it may be advantageous to adjust only the static or equilibrium floater pitch angle of a floating wind turbine, but not the oscillating angle of the floating wind turbine. For example, a corresponding actuation system may not be able to react fast enough to adjust the oscillating angle and/or it may not be efficient to adjust the oscillating angle, e.g. because the adjustment may require more energy than is gained. Alternatively, the actuation system may be configured to dampen oscillations of the floater pitch angle.

According to a further embodiment of the invention, information indicative of the floater pitch can be determined if the sensor signal is indicative of a vertical angle between a wind direction and an orientation of the wind sensor and/or an orientation of the part of the wind turbine on which the wind sensor is mounted. The latter orientation may for example be a central axis of the tower of the wind turbine or a plane orthogonal to the central axis.

According to a further embodiment of the invention, the wind sensor is the only sensor providing a sensor signal based on which the information is determined. Such an embodiment may be advantageous in order to avoid any expenses related to additional sensors. Such an embodiment may be especially simple and efficient.

According to the invention, the wind sensor signal provided by the wind sensor is used for determining further information indicative of an orientation of a wind rotor of the floating wind turbine relative to a tower and/or the floating base of the floating wind turbine and/or further information on the basis of which a mode of operation of the wind turbine may be set, in particular whether or not to shut down the wind turbine.

Thus, the wind sensor may be usable for other purposes than determining a spatial arrangement of the floating base with respect to the environment. Accordingly, wind sensors may be used for determining the spatial arrangement that are already installed in the wind turbine for these other purposes, which may comprise conventional yaw error control, the monitoring of startup and shutdown limits, and/or the reaction to wind gusts, e.g. by using lidar-assisted control.

According to a further embodiment of the invention, the wind sensor, in particular an optical wind sensor such as a lidar wind sensor, is configured to measure the wind flow at at least two measurement points and/or in at least two measurement directions. The sensor signal may comprise a plurality of sensor signal components, wherein each of the sensor signal components may correspond to a measurement point and/or a measurement direction.

Such an embodiment may be advantageous to improve or extend the information about the spatial arrangement of the floating base. For example, the wind sensor may be a one-dimensional wind sensor capable of measuring wind speed only along a given direction. In this case, further measurements may be helpful to determine wind speed in other directions. The combined measurements may for example be useful for determining wind direction. Also, an angle, in particular a floater pitch angle, may be derived from at least two wind speed measurements, e.g. of a lidar wind sensor, and the corresponding sensor signal components based on a model and corresponding modelling assumptions.

Furthermore, such an embodiment may allow to determine information indicative of a wind flow field, especially in case the wind flow is not constant, but changes in vertical direction and/or across the horizontal plane, in particular in the vicinity of the wind turbine.

According to a further embodiment of the invention, the processing unit is further configured to determine a wind shear based on the wind sensor signal indicative of the wind flow at the at least two measurement points and the processing unit determines the information based on the wind shear. The wind shear may be a vertical or a horizontal wind shear. For this embodiment, an optical wind sensor, in particular a lidar wind sensor, may be especially suitable.

Especially if the wind shear is and/or is assumed to be a vertical wind shear, the determined wind shear may be useful as information indicative of a roll angle of the floating wind turbine. After all, the direction of the wind shear as seen from the wind sensor will differ depending on the roll angle. In this way, the absolute roll angle relative to the vertical direction may be determined.

According to a further embodiment of the invention, the information is indicative of a floater roll.

According to a further embodiment of the invention, the wind sensor comprises two different wind sensor units, which are each configured to provide a respective wind sensor signal indicative of a wind flow, in particular the wind flow at the respective wind sensor. These wind sensors may be mounted on different parts of the wind turbine, for example one on the nacelle, and one on the tower and/or on the floating base.

Such an embodiment may allow to distinguish between conventional yaw, e.g. of the nacelle relative to the tower, and floater yaw between the floating base and the environment, in particular the wind direction of the environment. Distinguishing between conventional yaw and floater yaw may be advantageous, if the floating base is asymmetric and there is a preferred orientation of the floating base relative to the environment, in particular to the wind direction and/or the wave direction of the environment. The preferred orientation of the floating base may result from structural and/or geometric properties of the floating base, which may for example help to prevent that the absolute value of the floating pitch angle becomes too large.

According to a further embodiment of the invention, the information is indicative of a floater yaw.

According to a further embodiment of the invention, the wind sensor signal is indicative of a vertical angle of the wind flow. Accordingly, the wind sensor may be configured to measure the vertical angle of the wind flow. A vertical angle of the wind flow may be defined as the vertical angle between the wind flow and a reference direction defined by the wind turbine. For this purpose, a three-dimensional ultrasonic sensor and/or a two-dimensional ultrasonic or mechanical sensor may be especially suitable. Such a two-dimensional sensor may be flipped from an essentially horizontal alignment, e.g. in a conventional wind turbine, to an alignment along a vertical plane in floating wind turbine, in particular a vertical plane orthogonal to the rotor plane. The essentially horizontal alignment may be advantageous for conventional yaw error control, while the alignment along the vertical plane may be advantageous for determining the floater pitch.

According to a further embodiment of the invention, the information is indicative of an oscillating motion of the floating base relative to the environment, in particular a frequency and/or an amplitude of the oscillating motion, in particular an oscillating rotation. The oscillating motion may correspond to a dynamic angular component. The oscillating motion may result from waves, ocean currents, the wind, and/or controller actuations. The frequency of the oscillations may be between 1/2 Hz and 1/60 Hz, in particular between 1/15 Hz and 1/45 Hz, in particular approximately 1/30 Hz.

The oscillation may be along one or more translational degrees of freedom. If the oscillation is along a translational degree of freedom, a wind speed measured by the wind sensor may change periodically, while the wind direction may remain constant. Alternatively or additionally, the oscillation may be around one or more rotational degrees of freedom. If the oscillation is around a rotational degree of freedom, the wind direction measured by the wind sensor may change periodically, while the wind speed may be constant.

Information indicative of an oscillating motion may be advantageous in order to adequately control an actuation system, for example to dampen the oscillation. Dampening an oscillation may be helpful to increase energy yield and/or to prevent malfunction or damage to the wind turbine.

According to a further embodiment of the invention, the information is indicative of an offset, in particular a rotational offset, of the floating base relative to the environment. The rotational offset may be a static or equilibrium angle. If there were no forces from wind, current or waves, the rotational offset may be based on a center of gravity of the wind turbine. The rotational offset, in particular of floater roll and floater pitch, may be defined to be zero, if a central axis of the wind turbine, in particular of the tower of the wind turbine, is vertical. Thus, the rotational offset may denote an inclination of the wind turbine. In the absence of wind or waves, in particular at 0 m/s wind speed, the wind turbine may lean a bit forward due to a heavy nose or front part of the nacelle. Such leaning forward may correspond to a floater pitch offset slightly larger than zero.

Wind loading may change the thrust, i.e. force, on the wind turbine, in particular on the wind rotor, resulting in a floater pitch offset different from the above-described floater pitch offset at 0 m/s. At low wind speeds, the floater pitch offset may be smaller but still positive, e.g. +0.3 degrees at 3 m/s wind speed. At larger wind speeds and corresponding higher wind loading, the floater pitch offset may be negative, i.e. the wind turbine may lean backward. For example, the floater pitch offset may be -5.0 degrees at 10 m/s wind speed and -4.0 degrees at 12 m/s wind speed. A wind-driven ocean current may create a force opposing the thrust force of the wind. This force by the ocean current may increase as a function of wind speed. At very large wind speeds, in particular at wind speeds above rated wind, a blade pitch of the wind rotor may be adjusted so that the thrust force of the wind is decreased. Thus, at very high wind speeds, the force by the ocean current in combination with the opposing thrust force of the wind may result in a larger but typically still negative floater pitch offset compared with the floater pitch offset at rated wind, e.g. between -3.0 to +0.5 at 25 m/s. The rotational offset, in particular the floater pitch offset, may depend on a design of the floating base and/or the sensitivity of the floating base to currents.

A dynamic angular component may oscillate about the offset. The offset may be defined as a mean value averaged over the oscillating motion. The dynamic angular component may result from an interaction between a structure of the wind turbine and its environment, in particular wind, current and waves. For example, the oscillation may be +/- 0.5 degrees around the floater pitch offset at 3 m/s wind speed, +/- 3.0 degrees around the floater pitch offset at 10 m/s wind speed, +/- 2.5 degrees around the floater pitch offset at 12 m/s wind speed, and/or +/- 1 degrees around the floater pitch offset at 25 m/s wind speed.

Information indicative of an offset, in particular a rotational offset, may be advantageous in order to adequately arrange the wind turbine with respect to the wind, e.g. such that energy yield is increased. For example, if the rotational offset is a floater pitch offset, it may be advantageous to arrange the wind turbine by means of an actuation system such that the absolute value of the floater pitch offset is zero or is at least smaller than a predetermined threshold, e.g. 6 degrees. Such an actuation system may be configured to keep the wind turbine upright under strong winds. For example, a floating wind turbine of a spar-buoy type may operate with a floating pitch offset of around 3 to 6 degrees at rated wind.

If the rotational offset is a floater yaw offset, it may be advantageous to arrange the wind turbine by means of an actuation system such that the absolute value of the floater yaw offset is zero or is at least smaller than a predetermined threshold, e.g. 10 degrees. Exceeding the predetermined threshold may have adverse consequences for example on a mooring system of the floating wind turbine.

According to a further embodiment of the invention, the processing unit is further configured to determine whether the spatial arrangement of the floating base satisfies a threshold criterion. When the spatial arrangement ceases to satisfy the threshold criterion, an operational mode of the wind turbine may be changed by a control system.

For example, the threshold criterion may specify a predetermined angle, e.g. a maximum floater pitch angle or a maximum floater roll angle. If the corresponding angle of the floating base exceeds the predetermined angle, the wind turbine may shut down. As another example, the threshold criterion may specify a predetermined frequency, e.g. a maximum frequency of oscillations of the floater pitch and/or of the floater roll. If the corresponding frequency of the floating base motion exceeds the predetermined frequency, the wind turbine may shut down.

According to a further embodiment of the invention, the information is determined based on the assumption that a wind direction of the wind flow is horizontal. Horizontal wind flow may include slight deviations, e.g. by 5 degrees, in particular by 1 degree. The mentioned assumption may be reasonable, if the wind turbine is a floating wind turbine installed in a lake or in the sea, where mountains or related geographical features, which might lead to non-horizontal wind flow, are typically absent.

Assuming horizontal wind flow may be advantageous to determine a rotation of the floating base relative to a static environment, in particular relative to the part of the earth's surface above which the wind turbine is arranged. Without the mentioned assumption, it may only be possible to determine the spatial arrangement of the floating base with respect to the wind flow given that a wind sensor is used.

According to a further embodiment of the invention, the information is indicative of a non-horizontal wind flow, for example if the wind turbine is located close to a mountainous shore. Non-horizontal wind flow may be identifiable by processing, e.g. filtering, of the wind sensor signal.

According to a further embodiment of the invention, the information is indicative of a wind direction relative to a reference direction, wherein the reference direction is defined relative to the floating wind turbine, in particular relative to the floating base and/or a tower of the floating wind turbine. The reference direction may be defined relative to a central axis of the tower of the wind turbine. It may be parallel to a central axis of the tower of the wind turbine. The reference direction may be parallel to a plane that is orthogonal to the central axis of the tower of the wind turbine. In addition, the reference direction may be parallel to an orthogonal axis of the rotor plane when projected on the above-described orthogonal plane and/or it may be parallel to the wind direction when projected on the above-described orthogonal plane. Defining a reference direction may be advantageous to determine the spatial arrangement of the wind turbine relative to the wind and/or relative to the environment.

According to a further embodiment of the invention, a floating wind turbine comprises the sensor system according to any one of the above-described aspects or embodiments.

According to a further embodiment of the invention, the floating wind turbine comprises a control system, which may comprise the processing unit. The information is indicative of a wind direction relative to a reference direction, wherein the reference direction is defined relative to the floating wind turbine, in particular relative to the floating base and/or a tower of the floating wind turbine. The control system is configured to rotate, in particular by means of an actuation system, the floating wind turbine such that the reference direction is aligned with the wind direction.

Alignment need not be exact, but may allow for slight deviations, e.g. of 5 degrees, in particular of 1 degree. Alignment may regard an offset and/or oscillations about the offset, in particular only the offset. Alignment may require a predetermined angle or range of angles between the wind direction and the reference direction. Such an embodiment may be advantageous to increase energy yield of the wind turbine and/or to prevent or reduce malfunction of or damage to the wind turbine.

Some embodiments have been described with reference to apparatus type claims whereas other embodiments have been described with reference to a method type claim. However, a person skilled in the art will gather from the above and the following description that, unless otherwise indicated, any combination of features relating to the method type claim and of features relating to apparatus type claims, is disclosed with this document.

The aspects defined above and further aspects of the present invention are apparent from the examples of embodiment to be described hereinafter and are explained with reference to the examples of embodiment.

### Brief Description of the Drawings

Figure 1 shows a floating wind turbine with a sensor system according to an exemplary embodiment of the invention.
Figure 2 shows the floating wind turbine of Figure 1 aligned with a wind flow.
Figure 3 shows the floating wind turbine of Figure 1 misaligned with a wind flow.

### Detailed Description

The illustrations in the drawings are schematic. In different drawings, similar or identical elements are provided with the same reference signs. For the sake of clarity and comprehensibility, reference signs are sometimes omitted for those features, for which reference signs have already been provided in earlier figures.

Before, referring to the drawings, exemplary embodiments will be described in further detail, some basic considerations will be summarized based on which exemplary embodiments of the invention have been developed.

Rigid body rotations of a floating wind turbine may be determined and used as input for control and monitoring systems, using wind sensors applicable to other/existing wind turbine applications. The floating wind turbine floats in the water and is held in position by the mooring lines. The floating wind turbine has six individual degrees of freedom in which the floating wind turbine may move, namely three translations, i.e. floater surge, floater sway and floater heave, and three rotations, i.e. floater roll, floater pitch and floater yaw.

The degrees of freedom may depend on a given reference coordinate system. Internally for controlling purposes, they may be defined globally with respect to the rotor plane. Thus, surge may be in the direction orthogonal to the rotor plane, while floater roll is the rotation around the surge axis, comparable to tower fore-aft. Sway may be orthogonal on the surge direction and floater pitch is a rotation around the sway axis, comparable to tower side-side. Heave may be pointing upwards along the tower, while yaw is the rotation around the heave axis. Floater yaw and nacelle yaw may coincide but may also be distinguished.

According to a preferred embodiment, a method exploits wind sensors, in particular wind direction from wind sensors, to determine rotation information of a floating wind turbine. Instead of costing in additional sensors to determine rotation information explicitly, the idea is to use wind sensors that are used, or can be used, for other/existing functionalities. These sensors may therefore be present without any additional cost or complexity.

The measurement concept is to use a wind sensor to determine the wind direction relative to a reference line and translate that into a rotation information value.

As a wind sensor, a nacelle-mounted lidar may be used. A nacelle-mounted lidar normally measures wind speed and possibly relative wind direction. In some configurations, it comes with additional measures and derived features. A lidar typically uses several scanning points, and it may be necessary to average over multiple scanning points for robustness.

The lidar may measure the wind direction in more dimensions. For estimating floater pitch, the wind inflow angle is measured. For determining floater roll, the wind direction in 3D may be measured to have information available to measure the roll angle relative to a reference. Floater yaw angle is measured at the relative wind direction and covers both floater yaw orientation and nacelle or conventional yaw orientation. Normally, the relative wind direction is used to yaw the nacelle into the wind.

As a wind sensor, a nacelle-mounted ultrasonic sensor may be used. A nacelle-mounted ultrasonic sensor may normally measure wind speed and relative wind direction. An ultrasonic sensor may have to be flipped by 90 degree to measure wind direction relative to a reference line or direction, e.g. a horizontal line at 0 degree floater pitch.

In general, processing, such as filtering, may be applied to compensate a non-horizontal wind inflow. This is less likely offshore, where floating turbines are installed. Filtering may be applied to clean the signal.

When the floater rotation has been determined, it can be used by the control and monitoring system. For example, it can be used to ensure that the controller or a control system attenuate the mean floater pitch angle or that the control system does not react to any oscillating floater pitch angles. Monitoring systems may curtail or shutdown a turbine if the floater pitch angle exceeds a threshold.

An advantage of the above-described approach is to exploit existing sensors to determine information that is useful in a control system of a floating turbine. As a further advantage, wind direction information can be exploited to determine floater rotation, e.g. floater pitch or floater roll. Floater yaw relates to yaw control and may be addressed already via yaw error control, i.e. aligning turbine nacelle into the wind, though the platform yaw needs to be controlled also. Finally, identical sensors may be used for onshore wind turbines, offshore fixed foundation wind turbines and offshore floating foundations wind turbines. To use similar hardware with only software changes is a cost/complexity advantage.

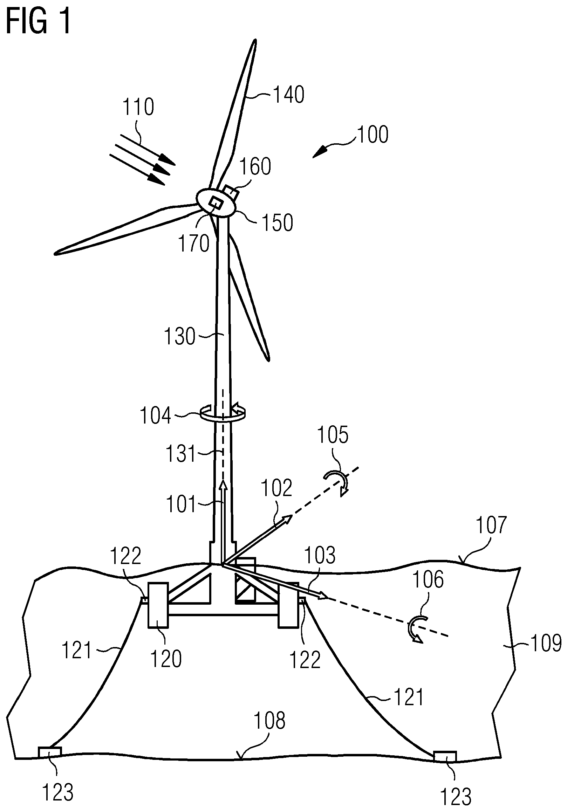

**Figure 1** shows a floating wind turbine 100 with a sensor system. The floating wind turbine 100 comprises a wind rotor 140, a nacelle 150, a tower 130, and a floating base 120. The tower 130 is mounted on the floating base 120. The floating base 120 floats in the sea water 109 at or below a sea surface 107. The floating base 120 is anchored to the sea floor 108 by two mooring lines 121. The mooring line 121 is fixed to the floating base 120 by a first mooring line fixation 122 and to the sea floor 108 by a second mooring line fixation 123.

Compared with a conventional non-floating wind turbine, the floating wind turbine 100, in particular the floating base 120 of the floating wind turbine 100, has six additional degrees of freedom, in which the floating wind turbine 100 may move.

The additional degrees of freedom are three translational degrees of freedom, namely floater surge 103, floater sway 102 and floater heave 101, and three rotational degrees of freedom, namely floater roll 106, floater pitch 105 and floater yaw 104.

Floater surge 103 is horizontal and in direction orthogonal to the rotor plane, while floater roll 106 regards rotation around the floater surge axis 103. Floater sway 102 is horizontal and in direction orthogonal to floater surge 103, while floater pitch 105 regards rotation around the floater sway axis 102. Floater heave 101 points upwards along the tower 130, while floater yaw 104 regards rotation around the floater heave axis 101.

The sensor system comprises a wind sensor 160, which is mounted on the nacelle 150. The wind sensor 160 is configured to provide a wind sensor signal indicative of a wind flow 110. The sensor system 160 further comprises a processing unit 170, which is arranged in the nacelle 150. The processing unit 170 is configured to receive the wind sensor signal and to determine, based on the wind sensor signal, information indicative of a spatial arrangement of the floating base 120 relative to an environment of the floating wind turbine 100, for example relative to the sea floor 108. The spatial arrangement can be described in terms of the mentioned six additional degrees of freedom.

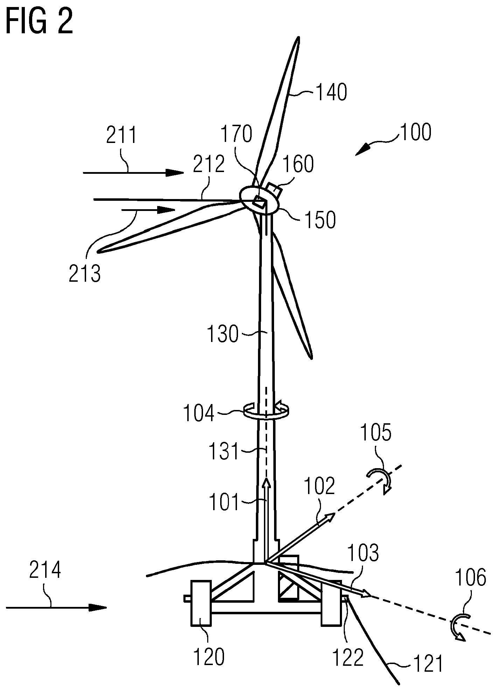

**Figure 2** shows the floating wind turbine 100 of Figure 1, wherein floater pitch 105 of the floating wind turbine 100 is determined by comparing a wind direction 211 measured by the nacelle-mounted wind sensor 160 with a reference direction 213. The wind direction 211 is but need not be parallel to a wave direction 214 of the sea water 109. The reference direction 213 is defined with respect to a reference line 212, which is defined relative to the tower 130 of the wind turbine 100. The reference line 212 lies in a plane orthogonal to a central axis of the tower 130 of the wind turbine 100 pointing in the direction, in which the wind rotor 140 is oriented. Alternatively, the reference line 212 may be defined orthogonal to the wind rotor plane. The reference direction 213 is parallel to the reference line 212 and points towards the wind turbine 100. In Figure 2, the reference direction 213 is aligned with the wind direction 211, both directions 211, 213 are parallel and point towards the wind turbine 100. This information regarding the alignment of wind direction 211 and reference direction 213 may indicate that a floater pitch angle α (not shown) of the floater pitch 105 is zero degrees.

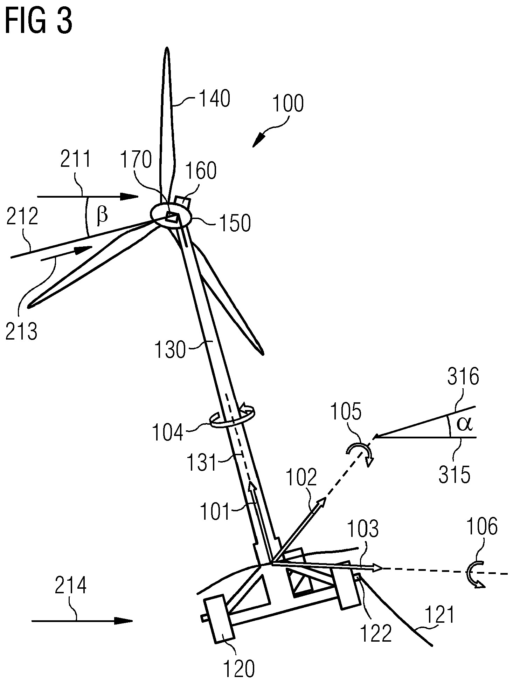

**Figure 3** shows the floating wind turbine 100 of Figure 1, wherein floater pitch 105 of the floating wind turbine 100 is determined by comparing a wind direction 211 measured by the nacelle-mounted wind sensor 160 with a reference direction 213. The reference direction 213 is defined in the same way as described with respect to Figure 2. In Figure 3, the reference direction 213 is misaligned with the wind direction 211, it deviates from the wind direction 211 by a reference angle of β degrees. If the wind turbine 100 tilts towards the wind and/or in direction of the wind rotor 140, β may be defined to be negative. If the wind turbine 100 tilts away from the wind and/or in direction opposite to the orientation of the wind rotor 140, β may be defined to be positive. According to these definitions, β is negative in Figure 3, e.g. -15 degrees. The floater pitch angle α is defined as the angle between a horizontal direction 315 orthogonal to floater sway 102 and a direction 316, which is orthogonal to floater sway 102 and orthogonal to a central axis 131 of the tower 130. If the wind turbine 100 tilts towards the wind and/or in direction of the wind rotor 140, the floater pitch angle α may be defined to be negative. If the wind turbine 100 tilts away from the wind and/or in direction opposite to the orientation of the wind rotor 140, the floater pitch angle α may be defined to be positive. In Figure 3, α equals β. Thus, the information regarding the misalignment between wind direction 211 and reference direction 213 by the reference angle β is indicative of a floater pitch angle α of the same amount.

It should be noted that the term "comprising" does not exclude other elements or steps and the use of articles "a" or "an" does not exclude a plurality. Also, elements described for different embodiments may be combined. It should also be noted that reference signs in the claims should not be construed as limiting the scope of the claims.

## Claims

1. A sensor system for a floating wind turbine (100), the sensor system comprising
a wind sensor (160) configured to provide a wind sensor signal indicative of a wind flow (110); and
a processing unit (170) configured to receive the wind sensor signal and to determine, based on the wind sensor signal, information indicative of a spatial arrangement (101, 102, 103, 104, 105, 106) of a floating base (120) of the floating wind turbine (100) relative to an environment (108) of the floating wind turbine (100);
wherein the information is indicative of a rotation (104, 105, 106) of the floating base (120), namely of a floater pitch (105), a floater roll (106), and/or a floater yaw (104) of the floating base (120) relative to the environment (108), and
**characterized in that** the wind sensor signal provided by the wind sensor (160) is used for determining further information indicative of an orientation of a wind rotor (140) of the floating wind turbine (100) relative to a tower (130) and/or the floating base (120) of the floating wind turbine (100).

2. The sensor system according to any one of the preceding claims,
wherein the wind sensor (160) comprises two different wind sensor units, which are mounted on different parts of the wind turbine, and
which are each configured to provide a respective wind sensor signal indicative of a wind flow,
wherein the sensor system is configured to distinguish between conventional yaw of the nacelle relative to the tower and floater yaw between the floating base and the environment.

3. The sensor system according to claim 2, wherein one of the two different wind sensor units is mounted on the nacelle, and one of the two different wind sensor units is mounted on the tower and/or on the floating base.

4. The sensor system according to any one of the preceding claims, wherein the wind sensor (160) is configured to measure the wind flow (110) at at least two measurement points and/or in at least two measurement directions.

5. The sensor system according to the preceding claim,
wherein the processing unit (170) is further configured to determine a wind shear based on the wind sensor signal indicative of the wind flow (110) at the at least two measurement points, and
wherein the processing unit (170) determines the information based on the wind shear.

6. The sensor system according to any one of the preceding claims, wherein the wind sensor signal is indicative of a vertical angle (β) of the wind flow (110).

7. The sensor system according to any one of the preceding claims, wherein the information is indicative of an oscillating motion of the floating base (120) relative to the environment (108), or wherein the information is indicative of a frequency, an amplitude of the oscillating motion, and/or of an oscillating rotation relative to the environment (108).

8. The sensor system according to any one of the preceding claims, wherein the information is indicative of a rotational offset of the floating (120) base relative to the environment (108).

9. The sensor system according to any one of the preceding claims, wherein the processing unit (170) is further configured to determine whether the spatial arrangement (101, 102, 103, 104, 105, 106) of the floating base (120) satisfies a threshold criterion.

10. The sensor system according to any one of the preceding claims, wherein the information is determined based on the assumption that a wind direction (211) of the wind flow (110) is horizontal.

11. The sensor system according to any one of the preceding claims, wherein the information is indicative of a wind direction (211) relative to a reference direction (213), wherein the reference direction (213) is defined relative to the floating wind turbine (100), in particular relative to the floating base (120) and/or a tower (130) of the floating wind turbine (100).

12. A floating wind turbine (100) comprising the sensor system according to any one of claims 1 to 11.

13. The floating wind turbine (100) according to the preceding claim, further comprising
a control system,
wherein the information is indicative of a wind direction (211) relative to a reference direction (213), wherein the reference direction (213) is defined relative to the floating wind turbine (100), in particular relative to the floating base (120) and/or a tower (130) of the floating wind turbine (100), and
wherein the control system is configured to rotate the floating wind turbine (100) such that the reference direction (213) is aligned with the wind direction (211).

14. A method of operating a floating wind turbine (100) comprising:
providing, by means of a sensor system according to one of the claims 1 to 11, a wind sensor signal indicative of a wind flow (110);
receiving, by means of a processing unit (170), the wind sensor signal; and
determining, by means of the processing unit (170) and based on the wind sensor signal, information indicative of a spatial arrangement (101, 102, 103, 104, 105, 106) of a floating base (120) of the floating wind turbine (100) relative to an environment (108) of the floating wind turbine (100).

15. The method according to claim 14 comprising the step of using the the wind sensor signal provided by the wind sensor (160)
for determining further information indicative of an orientation of a wind rotor (140) of the floating wind turbine (100) relative to a tower and/or the floating base of the floating wind turbine (100), and/or
for determining further information on the basis of which a mode of operation of the wind turbine (100) may be set, namely whether or not to shut down the wind turbine (100).

## Patentansprüche

1. Sensorsystem für eine schwimmende Windturbine (100), wobei das Sensorsystem Folgendes umfasst
einen Windsensor (160), der dazu konfiguriert ist, ein Windsensorsignal bereitzustellen, das eine Windströmung (110) angibt; und
eine Verarbeitungseinheit (170), die dazu konfiguriert ist, das Windsensorsignal zu empfangen und basierend auf dem Windsensorsignal Informationen zu bestimmen, die eine räumliche Anordnung (101, 102, 103, 104, 105, 106) einer schwimmenden Basis (120) der schwimmenden Windturbine (100) relativ zu einer Umgebung (108) der schwimmenden Windturbine (100) angeben;
wobei die Informationen eine Drehung (104, 105, 106) der schwimmenden Basis (120) angeben, nämlich eine Schwimmer-Neigung (105), ein Schwimmer-Schlingern (106) und/oder ein Schwimmer-Gieren (104) der schwimmenden Basis (120) relativ zu der Umgebung (108), und
**dadurch gekennzeichnet, dass**
das Windsensorsignal, das durch den Windsensor (160) bereitgestellt wird, verwendet wird
zum Bestimmen weiterer Informationen, die eine Ausrichtung eines Windrotors (140) der schwimmenden Windturbine (100) relativ zu einem Turm (130) und/oder der schwimmenden Basis (120) der schwimmenden Windturbine (100) angeben.

2. Sensorsystem nach einem der vorhergehenden Ansprüche, wobei der Windsensor (160) zwei unterschiedliche Windsensoreinheiten umfasst,
die an unterschiedlichen Teilen der Windturbine montiert sind, und
die jeweils dazu konfiguriert sind, ein jeweiliges Windsensorsignal bereitzustellen, das eine Windströmung angibt,
wobei das Sensorsystem dazu konfiguriert ist, zwischen einem herkömmlichen Gieren der Gondel relativ zu dem Turm und dem Schwimmer-Gieren zwischen der schwimmenden Basis und der Umgebung zu unterscheiden.

3. Sensorsystem nach Anspruch 2, wobei eine der zwei unterschiedlichen Windsensoreinheiten an der Gondel montiert ist und eine der zwei unterschiedlichen Windsensoreinheiten an dem Turm und/oder an der schwimmenden Basis montiert ist.

4. Sensorsystem nach einem der vorhergehenden Ansprüche, wobei der Windsensor (160) dazu konfiguriert ist, den Windstrom (110) an mindestens zwei Messpunkten und/oder in mindestens zwei Messrichtungen zu messen.

5. Sensorsystem nach dem vorhergehenden Anspruch,
wobei die Verarbeitungseinheit (170) ferner dazu konfiguriert ist, eine Windscherung basierend auf dem Windsensorsignal zu bestimmen, das die Windströmung (110) an den mindestens zwei Messpunkten angibt, und
wobei die Verarbeitungseinheit (170) die Informationen basierend auf der Windscherung bestimmt.

6. Sensorsystem nach einem der vorhergehenden Ansprüche, wobei das Windsensorsignal einen vertikalen Winkel (β) der Windströmung (110) angibt.

7. Sensorsystem nach einem der vorhergehenden Ansprüche, wobei die Informationen eine oszillierende Bewegung der schwimmenden Basis (120) relativ zu der Umgebung (108) angeben oder wobei die Informationen eine Frequenz, eine Amplitude der oszillierenden Bewegung und/oder eine oszillierende Drehung relativ zu der Umgebung (108) angeben.

8. Sensorsystem nach einem der vorhergehenden Ansprüche, wobei die Informationen einen Drehversatz der schwimmenden (120) Basis relativ zu der Umgebung (108) angeben.

9. Sensorsystem nach einem der vorhergehenden Ansprüche, wobei die Verarbeitungseinheit (170) ferner dazu konfiguriert ist, zu bestimmen, ob die räumliche Anordnung (101, 102, 103, 104, 105, 106) der schwimmenden Basis (120) ein Schwellenwertkriterium erfüllt.

10. Sensorsystem nach einem der vorhergehenden Ansprüche, wobei die Informationen basierend auf der Annahme bestimmt werden, dass eine Windrichtung (211) der Windströmung (110) horizontal ist.

11. Sensorsystem nach einem der vorhergehenden Ansprüche, wobei die Informationen eine Windrichtung (211) relativ zu einer Referenzrichtung (213) angeben, wobei die Referenzrichtung (213) relativ zu der schwimmenden Windturbine (100), insbesondere relativ zu der schwimmenden Basis (120) und/oder einem Turm (130) der schwimmenden Windturbine (100), definiert ist.

12. Schwimmende Windturbine (100), umfassend das Sensorsystem nach einem der Ansprüche 1 bis 11.

13. Schwimmende Windturbine (100) nach dem vorhergehenden Anspruch, ferner umfassend
ein Steuerungssystem,
wobei die Informationen eine Windrichtung (211) relativ zu einer Referenzrichtung (213) angeben, wobei die Referenzrichtung (213) relativ zu der schwimmenden Windturbine (100), insbesondere relativ zu der schwimmenden Basis (120) und/oder einem Turm (130) der schwimmenden Windturbine (100), definiert ist, und
wobei das Steuerungssystem dazu konfiguriert ist, die schwimmende Windturbine (100) derart zu drehen, dass die Referenzrichtung (213) an der Windrichtung (211) ausgerichtet ist.

14. Verfahren zum Betreiben einer schwimmenden Windturbine (100), umfassend:
Bereitstellen, mittels eines Sensorsystems nach einem der Ansprüche 1 bis 11, eines Windsensorsignals, das eine Windströmung (110) angibt;
Empfangen, mittels einer Verarbeitungseinheit (170), des Windsensorsignals; und
Bestimmen, mittels der Verarbeitungseinheit (170) und basierend auf dem Windsensorsignal, von Informationen, die eine räumliche Anordnung (101, 102, 103, 104, 105, 106) einer schwimmenden Basis (120) der schwimmenden Windturbine (100) relativ zu einer Umgebung (108) der schwimmenden Windturbine (100) angeben.

15. Verfahren nach Anspruch 14, umfassend den Schritt von Verwenden des des Windsensorsignals, das durch den Windsensor (160) bereitgestellt wird
zum Bestimmen weiterer Informationen, die eine Ausrichtung eines Windrotors (140) der schwimmenden Windturbine (100) relativ zu einem Turm und/oder der schwimmenden Basis der schwimmenden Windturbine (100) angeben, und/oder
zum Bestimmen weiterer Informationen, auf deren Grundlage ein Betriebsmodus der Windturbine (100) eingestellt werden kann, nämlich ob die Windturbine (100) abzuschalten ist oder nicht.

## Revendications

1. Système de capteur pour une éolienne flottante (100), le système de capteur comprenant
un capteur de vent (160) configuré pour fournir un signal de capteur de vent indicatif d'un écoulement de vent (110) ; et
une unité de traitement (170) configurée pour recevoir le signal de capteur de vent et pour déterminer, sur la base du signal de capteur de vent, des informations indicatives d'un agencement spatial (101, 102, 103, 104, 105, 106) d'une base flottante (120) de l'éolienne flottante (100) par rapport à un environnement (108) de l'éolienne flottante (100) ;
dans lequel les informations sont indicatives d'une rotation (104, 105, 106) de la base flottante (120), à savoir d'un tangage flottant (105), d'un roulis flottant (106) et/ou d'un lacet flottant (104) de la base flottante (120) par rapport à l'environnement (108), et
**caractérisé en ce que**
le signal de capteur de vent fourni par le capteur de vent (160) est utilisé
pour déterminer des informations supplémentaires indicatives d'une orientation d'un rotor éolien (140) de l'éolienne flottante (100) par rapport à une tour (130) et/ou à la base flottante (120) de l'éolienne flottante (100).

2. Système de capteur selon l'une quelconque des revendications précédentes, dans lequel le capteur de vent (160) comprend deux unités de capteur de vent différentes,
qui sont montées sur différentes parties de l'éolienne, et
qui sont chacune configurées pour fournir un signal de capteur de vent respectif indicatif d'un écoulement de vent,
dans lequel le système de capteur est configuré pour distinguer un lacet conventionnel de la nacelle par rapport à la tour et un lacet flottant entre la base flottante et l'environnement.

3. Système de capteur selon la revendication 2, dans lequel l'une des deux unités de capteur de vent différentes est montée sur la nacelle, et l'une des deux unités de capteur de vent différentes est montée sur la tour et/ou sur la base flottante.

4. Système de capteur selon l'une quelconque des revendications précédentes, dans lequel le capteur de vent (160) est configuré pour mesurer l'écoulement de vent (110) au niveau d'au moins deux points de mesure et/ou dans au moins deux directions de mesure.

5. Système de capteur selon la revendication précédente,
dans lequel l'unité de traitement (170) est en outre configurée pour déterminer un cisaillement de vent sur la base du signal de capteur de vent indicatif de l'écoulement de vent (110) au niveau des au moins deux points de mesure, et
dans lequel l'unité de traitement (170) détermine les informations sur la base du cisaillement de vent.

6. Système de capteur selon l'une quelconque des revendications précédentes, dans lequel le signal de capteur de vent est indicatif d'un angle vertical (β) de l'écoulement de vent (110) .

7. Système de capteur selon l'une quelconque des revendications précédentes, dans lequel les informations sont indicatives d'un mouvement oscillant de la base flottante (120) par rapport à l'environnement (108), ou dans lequel les informations sont indicatives d'une fréquence, d'une amplitude du mouvement oscillant et/ou d'une rotation oscillante par rapport à l'environnement (108).

8. Système de capteur selon l'une quelconque des revendications précédentes, dans lequel les informations sont indicatives d'un décalage en rotation de la base flottante (120) par rapport à l'environnement (108).

9. Système de capteur selon l'une quelconque des revendications précédentes, dans lequel l'unité de traitement (170) est en outre configurée pour déterminer si l'agencement spatial (101, 102, 103, 104, 105, 106) de la base flottante (120) satisfait à un critère de seuil.

10. Système de capteur selon l'une quelconque des revendications précédentes, dans lequel les informations sont déterminées sur la base de l'hypothèse qu'une direction de vent (211) de l'écoulement de vent (110) est horizontale.

11. Système de capteur selon l'une quelconque des revendications précédentes, dans lequel les informations sont indicatives d'une direction de vent (211) par rapport à une direction de référence (213), dans lequel la direction de référence (213) est définie par rapport à l'éolienne flottante (100), en particulier par rapport à la base flottante (120) et/ou à une tour (130) de l'éolienne flottante (100).

12. Éolienne flottante (100) comprenant le système de capteur selon l'une quelconque des revendications 1 à 11.

13. Éolienne flottante (100) selon la revendication précédente, comprenant en outre
un système de commande,
dans lequel les informations sont indicatives d'une direction de vent (211) par rapport à une direction de référence (213), dans lequel la direction de référence (213) est définie par rapport à l'éolienne flottante (100), en particulier par rapport à la base flottante (120) et/ou à une tour (130) de l'éolienne flottante (100), et
dans lequel le système de commande est configuré pour faire tourner l'éolienne flottante (100) de sorte que la direction de référence (213) est alignée avec la direction de vent (211).

14. Procédé de fonctionnement d'une éolienne flottante (100) comprenant :
la fourniture, au moyen d'un système de capteur selon l'une quelconque des revendications 1 à 11, d'un signal de capteur de vent indicatif d'un écoulement de vent (110) ;
la réception, au moyen d'une unité de traitement (170), du signal de capteur de vent ; et
la détermination, au moyen de l'unité de traitement (170) et sur la base du signal de capteur de vent, d'informations indicatives d'un agencement spatial (101, 102, 103, 104, 105, 106) d'une base flottante (120) de l'éolienne flottante (100) par rapport à un environnement (108) de l'éolienne flottante (100).

15. Procédé selon la revendication 14 comprenant l'étape d'utilisation du signal de capteur de vent fourni par le capteur de vent (160)
pour déterminer des informations supplémentaires indicatives d'une orientation d'un rotor éolien (140) de l'éolienne flottante (100) par rapport à une tour et/ou à la base flottante de l'éolienne flottante (100), et/ou
pour déterminer des informations supplémentaires sur la base desquelles un mode de fonctionnement de l'éolienne (100) peut être réglé, à savoir s'il faut ou non arrêter l'éolienne (100).
